# EUROPÄISCHE PATENTSCHRIFT

(11) **EP 3 788 911 B1**
(45) Veröffentlichungstag und Bekanntmachung des Hinweises auf die Patenterteilung: **18.05.2022**
(21) Anmeldenummer: 20194544.1
(22) Anmeldetag: 04.09.2020
(51) Int. Cl.: A47B 88/43, F24C 15/16, A47B 88/50

(54) **GERÄT ZUR REINIGUNG, LAGERUNG ODER GARUNG VON GEGENSTÄNDEN**
DEVICE FOR CLEANING, STORING OR COOKING ARTICLES
APPAREIL DE NETTOYAGE, DE STOCKAGE OU DE CUISSON D'OBJETS

(30) Priorität: 09.09.2019 DE 102019124058
(43) Veröffentlichungstag der Anmeldung: 10.03.2021
(73) Patentinhaber: Accuride International GmbH, 65582 Diez/Lahn (DE)
(72) Erfinder: Heffel, Andreas, 56170 Bendorf (DE)
(74) Vertreter: WSL Patentanwälte Partnerschaft mbB

(56) Entgegenhaltungen:
- EP-A2- 0 578 905
- EP-A2- 1 887 172
- EP-A2- 2 767 763
- US-A1- 2003 234 602
- US-A1- 2008 143 224
- US-A1- 2010 018 517
- US-A1- 2018 313 545

## Beschreibung

Die Erfindung betrifft ein Gerät zur Reinigung, Lagerung oder Garung von Gegenständen sowie eine Trageinrichtung für eins solches Gerät.

Das Gerät ist im Sinne der vorliegenden Anmeldung dazu geeignet, mindestens einen Gegenstand zu reinigen, lagern oder zu garen. Ein entsprechendes Gerät kann insbesondere von einem Kühlschrank, einem Backofen, einem Dampfgarer oder einer Spülmaschine gebildet sein. Das Gerät kann insbesondere in Form eines Haushaltseinbaugeräts oder eines gewerblich genutzten Geräts ausgeführt sein.

Das Gerät umfasst ein von Wandungen gebildetes Gehäuse, mittels dessen ein Innenraum räumlich eingefasst ist. Am Beispiel eines Backofens ist der Innenraum von einem Garraum gebildet. Ferner umfasst das jeweilige Gerät mindestens eine aus dem Gehäuse entnehmbare Trageinrichtung sowie mindestens eine an der Trageinrichtung angeordnete Verriegelungseinheit. Die Trageinrichtung umfasst ihrerseits mindestens ein Schienensystem sowie mindestens ein Tragelement. Das Schienensystem weist mindestens zwei miteinander verbundene, relativ zueinander bewegliche Schienen auf. Insbesondere kann es von einem Teleskopauszug gebildet sein. Das Tragelement dient dazu, mindestens einen Gegenstand aufzunehmen. Beispielsweise kann das Tragelement bei einem als Kühlschrank ausgebildeten Gerät von einem Einlegeboden oder bei einem beispielsweise als Backofen ausgebildeten Gerät von einem Rost oder Backblech gebildet sein. Die Verriegelungseinheit umfasst mindestens ein Verriegelungselement, welches zwischen einer Blockierstellung und einer Freistellung überführbar ist. In einem Einbauzustand der Trageinrichtung, in dem die Trageinrichtung an dem Gehäuse gelagert ist, liegt die Verriegelungseinheit in einem Freizustand vor, bei dessen Vorliegen das Verriegelungselement das Ausziehen des Schienensystems freigibt. In einem Ausbauzustand hingegen, in dem die Trageinrichtung von dem Gehäuse getrennt ist, liegt die Verriegelungseinheit in einem Blockierzustand vor, bei dessen Vorliegen das Verriegelungselement unter Bildung eines Formschlusses das Ausziehen des Schienensystems blockiert. Auf diese Weise ist ein unbeabsichtigtes Ausziehen des Schienensystems, beispielsweise bei einer Entnahme der Trageinrichtung aus dem Haushaltsgerät oder Gewerbegerät, gehemmt.

Üblicherweise wird die Trageinrichtung regelmäßig aus dem Gehäuse entnommen, beispielsweise im Zuge einer Reinigung der selbigen. Dabei kann es vorkommen, dass ein Verwender des Geräts die Trageinrichtung dabei bewegt und verdreht, also gegen eine in dem Einbauzustand der Trageinrichtung vorliegende Ausrichtung, ausrichtet, um hierdurch beispielsweise eine Unterseite der Trageinrichtung reinigen zu können. Als problematisch bei den bekannten Geräten hat es sich jedoch herausgestellt, dass die Schienen des Schienensystems für den Fall, dass das Schienensystem im Zuge einer Entnahme bewegt und verdreht wird, ungewollt ausgezogen werden. Nachteiliger Weise kann es hierdurch zu einer Behinderung des Verwenders oder gar zu einer Verletzung des selbigen kommen.

Der vorliegenden Anmeldung liegt mithin die Aufgabe zugrunde, ein Gerät sowie eine geeignete Trageinrichtung mit einem alternativen Verriegelungselement zur Verfügung zu stellen, dessen Zuverlässigkeit gegenüber dem Stand der Technik verbessert ist.

Die zugrundeliegende Aufgabe wird erfindungsgemäß durch eine Vorrichtung mit den Merkmalen des Anspruch 1 gelöst. Vorteilhafte Ausgestaltungen ergeben sich aus den Unteransprüchen . Erfindungsgemäß weist die die an der Trageinrichtung (5) angeordnete Verriegelungseinheit ein Stellelement auf, das mit dem Verriegelungselement zusammenwirkt, wobei das Stellelement um eine Drehachse drehbar an der Trageinrichtung gelagert ist, sodass es zwischen einer Ruhestellung und einer Stützstellung überführbar ist, wobei das Stellelement bei Vorliegen in seiner Stützstellung dazu geeignet ist, das Verriegelungselement entgegen der Wirkung der Schwerkraft in dessen Blockierstellung zu halten.

Die Erfindung hat viele Vorteile. Das Verriegelungselement blockiert das Ausziehen des Schienensystems bei Vorliegen der Trageinrichtung in ihrem Ausbauzustand und zwar sowohl bei Vorliegen der Trageinrichtung in einer Nutzungsausrichtung als auch in einer Umkehrausrichtung. In der Nutzungsausrichtung der Trageinrichtung ist das Tragelement zur Aufnahme eines Gegenstands vorgesehen. Insbesondere kann das Tragelement bei Vorliegen der Trageinrichtung in ihrer Nutzungsausrichtung horizontal orientiert sein wie es für ein Backblech, einen Einlegeboden oder einen Rost üblich ist. Die Trageinrichtung liegt typischerweise insbesondere bei Vorliegen in ihrem Einbauzustand in ihrer Nutzungsausrichtung vor. In der Nutzungsausrichtung der Trageinrichtung wird das Ausziehen des Schienensystems wie bereits im Stand der Technik bekannt blockiert, sofern sich die Trageinrichtung in ihrem Ausbauzustand befindet. Hierbei kann das Verriegelungselement infolge der Wirkung der Schwerkraft in seiner Blockierstellung haltbar sein, wobei beispielsweise das Verriegelungselement formschlüssig mit einem Kopplungselement eingreift. In der Umkehrausrichtung der Trageinrichtung, welche gegenüber der Nutzungsausrichtung um eine horizontale Drehachse um 180° gedreht ist, steht die Trageinrichtung gewissermaßen "auf dem Kopf". Durch das erfindungsgemäße Gerät wird sichergestellt, dass auch in diesem Szenario das unbeabsichtigte Ausziehen des Schienensystems blockiert ist.

Hierbei ist es grundsätzlich problematisch, dass die Schwerkraft eigentlich eine Bewegung des Verriegelungselements in eine gegenüber der Nutzungsausrichtung entgegengesetzte Richtung "zieht". Dies kann dazu führen, dass das Verriegelungselement unbeabsichtigter Weise in seine Freistellung überführt wird. Mittels des Stellelements wird eben eine solche Bewegung des Verriegelungselements verhindert, sodass letzteres trotz entgegenstehender Wirkung der Schwerkraft in seiner Blockierstellung bleibt und zwar auch dann, wenn die Trageinrichtung in ihrer Umkehrausrichtung vorliegt. Diese Funktionalität des Stellelements wird mittels dessen Verdrehbarkeit an der Trageinrichtung erzielt. Insbesondere kann das Stellelement infolge eines außermittigen Schwerpunkts bezogen auf die zugehörige Drehachse im Zuge des "Umdrehens" der Trageinrichtung, das heißt im Zuge einer Überführung derselben zwischen ihrer Nutzungs- und ihrer Umkehrausrichtung, allein infolge der Wirkung der Schwerkraft um die Drehachse gedreht werden, da die wirkende Gewichtskraft ein Drehmoment um die Drehachse hervorruft. Die Drehung, die im Zuge der Überführung in die Umkehrausrichtung auftritt, ist dazu nutzbar, das Verriegelungselement entgegen der auf selbiges wirkenden Gewichtskraft in der Blockierstellung zu halten, wobei beispielsweise zumindest ein Halteabschnitt des Stellelements entgegen der Wirkungsrichtung der Schwerkraft "nach oben" gedreht wird. Eine entsprechende Ausgestaltung ist auch dem nachstehenden Ausführungsbeispiel zu entnehmen. Dabei ist es besonders zu bevorzugen, wenn das Stellelement bei Vorliegen in seiner Ruhestellung die Überführung des Verriegelungselements zwischen seiner Freistellung und seiner Blockierstellung freigibt.

Vorzugsweise ist vorgesehen, dass das Stellelement seine Ruhestellung in der Nutzungsausrichtung der Trageinrichtung einnimmt. In der Nutzungsausrichtung ist das Tragelement zur Aufnahme eines Gegenstands vorgesehen. Denkbar ist so beispielsweise, dass das Tragelement bei einem als Backofen ausgebildeten Geräts die zu garenden Lebensmittel aufnimmt. Dabei versteht es sich, dass das Ausziehen des Schienensystems in dem Einbauzustand der Trageinrichtung gewünscht ist, um das Tragelement relativ zu dem Gehäuse ausziehen zu können. In einem Ausbauzustand hingegen ist gewünscht, dass das Ausziehen des Schienensystems blockiert ist, um zu verhindern, dass die Schienen des Schienensystems ungewollt auseinander laufen. Gemäß der Erfindung ist somit erforderlich, dass das Stellelement die Überführung des Verriegelungselements zwischen seiner Freistellung und seiner Blockierstellung freigibt, sofern die Trageinrichtung in der Nutzungsausrichtung vorliegt.

Das Verriegelungselement ist gemäß einer vorzugsweisen Ausgestaltung der Erfindung um eine Drehachse drehbar an der Trageinrichtung gelagert, wobei vorzugsweise das Verriegelungselement und das Stellelement um dieselbe Drehachse drehbar sind. Auf diese Weise ist das Verriegelungselement besonders einfach zwischen seiner Blockierstellung und seiner Freistellung überführbar. Auch das Stellelement ist hierdurch einfach zwischen seiner Ruhestellung und seiner Stützstellung überführbar. Dabei ist vorzugsweise vorgesehen, dass das Verriegelungselement und das Stellelement unabhängig voneinander verdrehbar sind. Insbesondere wird hierdurch ermöglicht, dass das Verriegelungselement bei Vorliegen des Stellelements in seiner Ruhestellung weiterhin zwischen seiner Blockierstellung und seiner Freistellung überführbar ist. Ebenso ist es denkbar, dass das Verriegelungselement und das Stellelement um verschiedene Drehachsen drehbar sind, wobei die Drehachsen parallel oder windschief sein können.

Gemäß der Erfindung ist vorgesehen, dass ein Schwerpunkt des Verriegelungselements zumindest bei Vorliegen der Trageinrichtung in einer Nutzungsausrichtung in einem Abstand von der Drehachse angeordnet ist, wobei die Trageinrichtung ihre Nutzungsausrichtung zumindest bei Vorliegen in ihrem Einbauzustand aufweist. Vorteilhafter Weise wird somit bewirkt, dass das Verriegelungselement bei Einwirken einer äußeren Kraft, insbesondere der Schwerkraft, selbstständig verdrehbar ist. Insbesondere bei Vorliegen der Trageinrichtung in ihrer Nutzungsausrichtung ist gewünscht, dass die Verriegelungseinheit zwischen ihrem Freizustand und ihrem Blockierzustand überführbar ist. Um hierbei eine Überführung herzustellen, welche unabhängig von den Handlungen des Verwenders, also "automatisch", erfolgt, ist es besonders vorteilhaft, die Überführung infolge der auf das Verriegelungselement wirkenden Schwerkraft herbeizuführen. In besonders vorteilhafter Weise liegt das Verriegelungselement alleine bedingt durch die Wirkung der Schwerkraft bei Vorliegen der Trageinrichtung in ihrer Nutzungsausrichtung in ihrer Blockierstellung vor. Die Verriegelungseinheit befindet sich hierbei folglich in ihrem Blockierzustand, sodass die Schienen des Schienensystems nicht relativ zueinander beweglich sind. Bei einer solchen Ausgestaltung kann das Verriegelungselement besonders einfach mittels einer Krafteinwirkung entgegen der Schwerkraft in seine Freistellung bewegt werden, beispielsweise mittels eines mittelbaren oder unmittelbaren Anschlags an dem Gehäuse des Geräts.

In der Umkehrausrichtung der Trageinrichtung hingegen ist eine Überführung des Verriegelungselements von seiner Blockierstellung in seine Freistellung in aller Regel nicht gewünscht. Dies liegt darin begründet, dass das Ausziehen der Schienen relativ zueinander in aller Regel lediglich bei Vorliegen der Trageinrichtung in ihrem Einbauzustand und mithin in ihrer Nutzungsausrichtung gewünscht ist. Die Umkehrausrüstung kann hingegen typischerweise gar nicht während des Einbauzustands der Trageinrichtung eingenommen werden, sodass das Vorliegen der Trageinrichtung in ihrer Umkehrausrichtung auf den Ausbauzustand rückschließen lässt. Folglich soll das das Ausziehen des Schienensystems in der Umkehrausrichtung in aller Regel vermieden werden, um den Verwender des Geräts vor einer Behinderung infolge der auseinander laufenden Schienen zu bewahren. Selbstverständlich ist jedoch ebenso vorstellbar, dass das Verriegelungselement auch in der Umkehrausrichtung willentlich, beispielsweise infolge der Aufbringung einer händischen Kraft, in seine Freistellung überführbar ist, um hierdurch beispielsweise eine Reinigung der einzelnen Schienen des Schienensystems zu erleichtern.

Gemäß einem weiteren Merkmal der Erfindung ist vorgesehen, dass das Verriegelungselement und das Stellelement komplementäre Formschlussbereiche aufweisen, sodass das Stellelement bei Vorliegen in seiner Stützstellung unter Ausbildung eines Formschlusses mit dem Verriegelungselement eingreift. Dabei greift ein Formschlussbereich des Stellelements formschlüssig in den Formschlussbereich des Verriegelungselements ein und verhindert hierdurch, dass das Verriegelungselement in seinen Freizustand überführbar ist. Insbesondere ist eine feste Stützung des Verriegelungselements in der Umkehrausrichtung der Trageinrichtung vorteilhaft, um das Verriegelungselement in dieser Ausrichtung gegen die auf das selbige wirkende Schwerkraft abzustützen. Diese Stützung wird vorteilhafter Weise unter Bildung eines Formschlusses bewirkt.

Eine vorteilhafte Ausgestaltung der Erfindung sieht vor, dass ein Schwerpunkt des Stellelements zumindest bei Vorliegen der Trageinrichtung in einer Umkehrausrichtung in einem Abstand von der Drehachse angeordnet ist, um die das Stellelement drehbar ist. Vorteilhafter Weise wird somit bewirkt, dass das Stellelement bei Einwirken allein der Schwerkraft um die Drehachse verdrehbar ist. Insbesondere bei Vorliegen der Trageinrichtung in ihrer Umkehrausrichtung ist gewünscht, dass das Stellelement in seine Stützstellung überführen zu können. Um hierbei eine Überführung herzustellen, welche unabhängig von den Handlungen des Verwenders, also "automatisch", erfolgt, ist es besonders vorteilhaft, die Überführung infolge der auf das Stellelement wirkenden Schwerkraft herbeizuführen. Hierdurch wird bewirkt, dass die Schienen bei Vorliegen der Trageinrichtung in ihrer Umkehrausrichtung nicht ausziehbar sind und somit keine Behinderung oder gar Verletzungsgefahr für den Verwender darstellen.

Eine besonders vorteilhafte Weiterentwicklung der Erfindung sieht vor, dass das Stellelement in Form eines Teilkreisrings ausgebildet ist, der sich um die Drehachse erstreckt. Vorteilhafter Weise kann hierdurch sichergestellt werden, dass das Stellelement im Zuge der Drehbewegung nicht in unbeabsichtigter Weise an angrenzende Bauteile anschlägt. Ferner ist hierdurch eine besonders platzsparende Ausgestaltung des Stellelements möglich.

Vorzugsweise ist bzw. sind zumindest das Verriegelungselement, vorzugsweise ferner das Stellelement, einer Schiene des Schienensystems zugeordnet. Das Verriegelungselement und das Stellelement sind dabei vorzugsweise der gleichen Schiene des Schienensystems zugeordnet.

Erfindungsgemäß ist vorgesehen, dass die Verriegelungseinheit mindestens ein Kopplungselement umfasst, mit dem das Verriegelungselement formschlüssig zusammenwirken kann, wobei vorzugsweise das Verriegelungselement einen Hakenabschnitt zum Eingriff mit dem Kopplungselement aufweist. Mittels des Formschlusses zwischen dem Verriegelungselement und dem Kopplungselement wird das Ausziehen der Schienen blockiert. Hierbei liegt das Verriegelungselement in seiner Blockierstellung vor. Um das Ausziehen der Schienen freizugeben, muss der Formschluss aufgehoben werden, indem das Verriegelungselement in seine Freistellung überführt wird. Das Ausziehen der Schienen relativ zueinander ist somit in Abhängigkeit der Ausrichtung und des Zustands der Trageinrichtung blockier- oder freigebbar.

Hierbei ist es besonders bevorzugt, wenn das Kopplungselement einer anderen Schiene des Schienensystems zugeordnet ist als das Verriegelungselement, wobei das Kopplungselement, vorzugsweise unmittelbar, an der jeweiligen Schiene angeordnet ist. Hierdurch wird bewirkt, dass das Ausziehen des Schienensystems bei Bildung des Formschlusses zwischen dem Kopplungselement und dem Verriegelungselement blockiert wird.

Eine vorteilhafte Ausgestaltung der Erfindung sieht vor, dass die Trageinrichtung mindestens ein Auflageelement umfasst, mittels dessen das Schienensystem auf einer dem Gehäuse, vorzugsweise einer Seitenwandung des Gehäuses, zugeordneten Auflagefläche auflegbar ist.

Vorteilhafter Weise kann die Trageinrichtung somit in dem Innenraum des Geräts gelagert werden. Dabei ist vorzugsweise vorgesehen, dass das Auflageelement an einer Unterseite einer Schiene angeordnet ist.

Es ist gemäß einem weiteren Merkmal der Erfindung vorgesehen, dass das Stellelement mindestens einen Anschlagabschnitt aufweist, mittels dessen das Stellelement zumindest bei Vorliegen der Trageinrichtung in ihrem Einbauzustand an einem Anschlag anschlagen kann, sodass eine infolge der Wirkung der Schwerkraft bedingte Verdrehung des Stellelements um die Drehachse über die Ruhestellung hinaus blockiert ist. Hierdurch kann sichergestellt werden, dass die Überführung des Verriegelungselements von seiner Freistellung in seine Blockierstellung nicht von dem Stellelement infolge einer ungewünschten Ausrichtung des Stellelements blockiert wird. So ist beispielsweise vorstellbar, dass das Stellelement infolge einer Bewegung der Trageinrichtung ungewollt in eine Stützstellung überführt wird, bei deren Vorliegen das Verrieglungselement nicht mehr in seine Freistellung oder umgekehrt nicht in seine Blockierstellung überführbar ist. Ein solches Szenario gilt es zu vermeiden. Der Anschlagabschnitt dient mithin dazu, ungewollte Stellungen des Stellelements, insbesondere bei Vorliegen der Trageinrichtung in deren Nutzungsausrichtung, zu verhindern.

Eine weitere Ausgestaltung der Erfindung sieht vor, dass der Anschlag an dem Auflageelement ausgebildet ist. Dem Auflageelement kommt somit eine Doppelfunktion zu: Einerseits bewirkt das Auflageelement, dass das Schienensystem bei Vorliegen der Trageinrichtung in ihrem Einbauzustand an einem Anschlag des Gehäuses anschlagen kann. Andererseits wird mittels des Auflageelements verhindert, dass das Stellelement eine infolge der Wirkung der Schwerkraft nicht über seine Ruhestellung hinaus verdrehbar ist. Vorteilhafter Weise kann somit ein weiteres Bauteil eingespart werden, was sich insbesondere im Hinblick auf die Kosten und das Gewicht der Trageinrichtung und der Verriegelungseinheit als besonders vorteilhaft erweist.

Gemäß einer vorteilhaften Ausgestaltung der Erfindung ist vorgesehen, dass das Gerät eine Aufnahmeeinheit aufweist, die in Kraft übertragender Weise an dem Gehäuse angeordnet ist und dazu geeignet ist, die Trageinrichtung aufzunehmen, wobei vorzugsweise die Trageinrichtung auf einer Auflagefläche der Aufnahmeeinheit ablegbar ist. Die Aufnahmeeinheit kann insbesondere von einer Mehrzahl stabförmiger Streben gebildet sein, die miteinander verbunden sind. Vorteilhafter Weise kann das Auflageelement der Trageinrichtung mit der Aufnahmeeinheit des Gehäuses zusammenwirken. Dabei ist vorzugsweise vorgesehen, dass das Auflageelement auf die Auflagefläche der Aufnahmeeinheit auflegbar ist. Die Aufnahmeeinheit ist bei einem als Backofen ausgebildeten Gerät beispielsweise in Form von an den Seitenwandungen des selbigen, paarweise angeordneten Horizontalstreben gebildet, welche mittels Vertikalstreben verbunden sind. Die Aufnahmefläche wird hierbei vorzugsweise von einer Horizontalstrebe gebildet.

Der Erfindung sieht vor, dass das Verriegelungselement mindestens einen Anschlagabschnitt aufweist, der derart über die Trageinrichtung hinaus vorsteht, dass das Verriegelungselement im Zuge der Überführung der Trageinrichtung in deren Einbauzustand mittelbar oder unmittelbar an dem Gehäuse anschlagen kann, sodass das Verriegelungselement automatisch in dessen Freistellung überführbar ist. Hierdurch wird sichergestellt, dass das Verriegelungselement ohne eine besondere Handlung des Verwenders von seiner Blockierstellung in seine Freistellung überführbar ist. Dies wird insbesondere dadurch ermöglicht, dass der Anschlagabschnitt über die Trageinrichtung hinaus hervorsteht und hierdurch an dem Gehäuse anschlagen kann, sobald der Verwender die Trageinrichtung in ihren Einbauzustand überführt, während die Trageinrichtung als solche nicht in unbeabsichtigter Weise an dem Gehäuse anschlägt. Die Überführung des Verriegelungselements von seiner Blockierstellung in seine Freistellung wird mithin "automatisch" bewirkt.

Die vorliegende Erfindung umfasst auch eine Trageinrichtung mit einer daran angeordneten Verriegelungseinheit mit den Merkmalen, wie sie hierin beschrieben und in den angefügten Ansprüchen definiert sind. Die erfindungsgemäße Trageinrichtung mit daran angeordneter Verriegelungseinheit ist ausgebildet und vorgesehen für das Einsetzen und Lagern im Innenraum eines Geräts, wie es ebenfalls hierin beschrieben ist, vorzugsweise eines Backofens oder Dampfgarers. Zweckmäßigerweise weist die Trageinrichtung ein Paar von Schienensystemen auf, welche auf gegenüberliegenden Seiten des Tragelements montiert sind. Weiter vorzugsweise weist jedes der beiden Schienensysteme genau eine Verriegelungseinheit auf.

Ein Ausführungsbeispiel der Erfindung ist in den Zeichnungen rein schematisch dargestellt und wird nachfolgend näher beschrieben. Es zeigt:
- Figur 1: eine Frontansicht eines erfindungsgemäßen Geräts,
- Figur 2: eine Detailansicht des einer Trageinrichtung sowie einer Verriegelungseinheit,
- Figur 3: wie Figur 2, wobei die Verrieglungseinheit in einem Freizustand vorliegt,
- Figur 4: wie Figur 3, wobei ein Schienensystem der Trageinrichtung ausgezogen ist und
- Figur 5: wie Figur 2, wobei die Trageinrichtung in einer Umkehrausrichtung vorliegt.

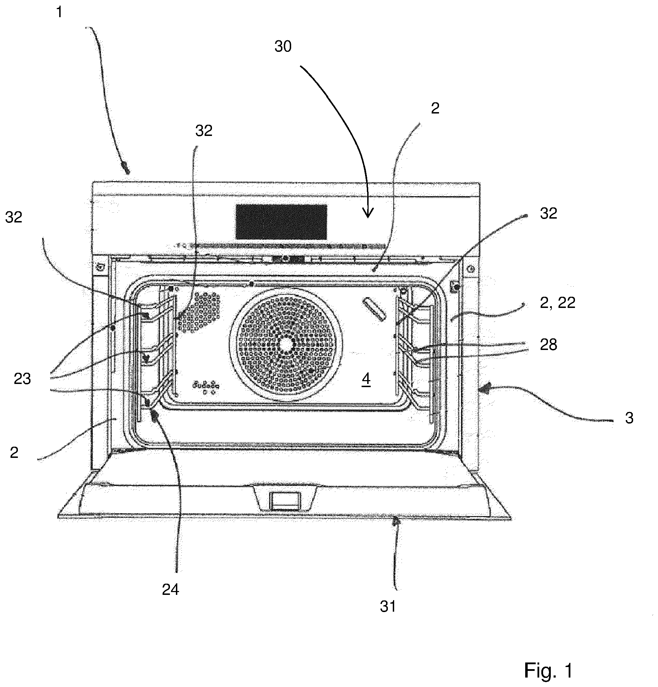

Ein Ausführungsbeispiel, das in den **Figuren 1 bis 5** gezeigt ist, betrifft eine erfindungsgemäße Trageinrichtung **5** sowie ein erfindungsgemäßes Gerät **1,** welches im vorliegenden Beispiel nach Art eines Backofens zur Garung von Lebensmitteln ausgebildet ist. Ein derartiges Gerät **1** ist beispielhaft in **Figur 1** dargestellt. Das Gerät **1** weist ein von Wandungen **2** gebildetes, quaderförmiges Gehäuse **3** auf, welches einen Innenraum **4** einschließt. Eine Wandung **2** des Gehäuses **3,** welche zugleich eine Frontseite **30** des Geräts **1** ausbildet, ist mit einer Tür **31** versehen. Ferner weist das Gerät **1** eine im Innenraum **4** angeordnete Aufnahmeeinheit **24** zur Ablage einer erfindungsgemäßen Trageinrichtung **5** auf. Die Aufnahmeeinheit **24** ist an zwei gegenüberliegenden Seitenwandungen **22** des Gehäuses **3** angeordnet und ist aus von einer Mehrzahl von metallischen Horizontalstreben **28** und Vertikalstreben **32** gebildet.

Die Horizontalstreben **28** sind hierbei als Strebenpaare in einem vertikalen Abstand zueinander an den Seitenwandungen **22** des Gehäuses **3** angeordnet und weisen jeweils eine L-förmige Form auf. Dabei bildet diejenige Horizontalstrebe **28** des Strebenpaares, welche unterhalb der ihr zugeordneten Horizontalstrebe **28** angeordnet ist, eine Auflagefläche **23** für die Trageinrichtung **5** aus, während die obere Horizontalstrebe **28** des Strebenpaares verhindert, dass die Trageinrichtung **5** infolge einer asymmetrischen Beladung eines jeweiligen Tragelements kippt. Die einer Seitenwandung **22** zugeordneten Horizontalstreben **28** sind an zwei Vertikalstreben **32** fixiert. Hierbei ist jeweils eine Vertikalstrebe **32** an einer rückseitigen Wandung **2** des Geräts **1** angeordnet, während die andere Vertikalstrebe **32** in einem der Tür **31** zugewandten Bereich der jeweiligen Seitenwandung **22** angeordnet ist.

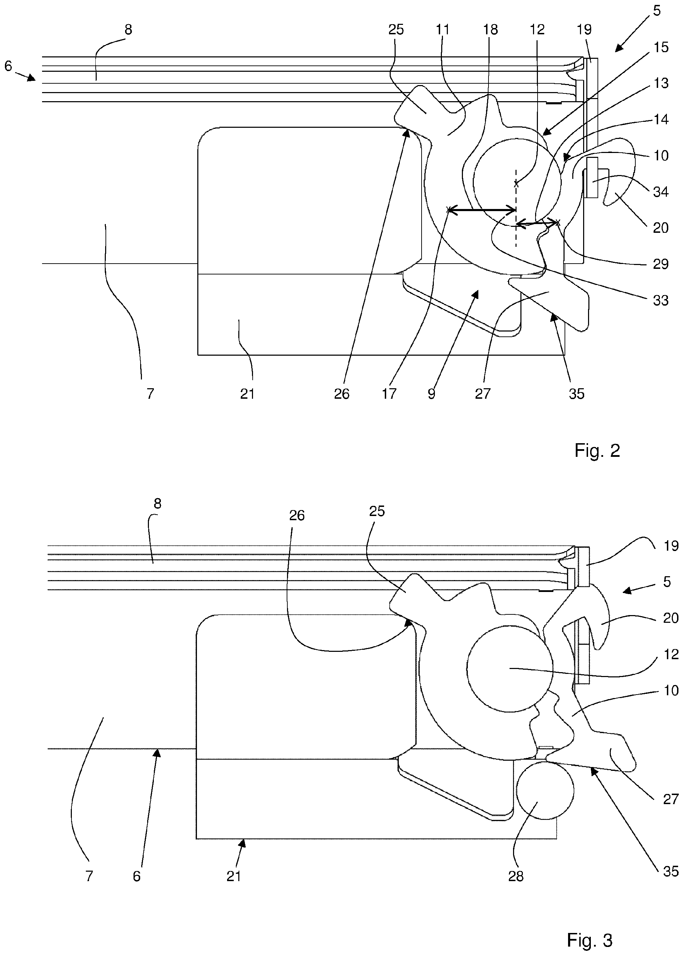

Ferner umfasst das erfindungsgemäße Gerät **1** eine aus dem Gehäuse **3** entnehmbare Trageinrichtung **5** sowie eine Verriegelungseinheit **9,** welche in den **Figuren 2 bis 5** gezeigt sind. Dabei ist die Verriegelungseinheit **9** an der Trageinrichtung **5** angeordnet.

Die Trageinrichtung **5** weist ein Schienensystem **6** sowie ein Tragelement auf, das in den Figuren nicht dargestellt ist. Hierbei umfasst das Schienensystem **6** zumindest zwei miteinander verbundene, relativ zueinander bewegliche Schienen **7, 8.** Ferner umfasst das Gerät **1** mittlere Schienen **36,** welche aufgrund ihrer Anbindung an die äußeren Schienen **7, 8** automatisch erfasst sind. Das Tragelement kann beispielsweise in Form eines Rosts ausgebildet und dazu hergerichtet sein, die zu garenden Lebensmittel aufzunehmen. Ferner umfasst die Trageinrichtung **5** ein Auflageelement **21,** welches an einer Schiene **7** des Schienensystems **6** angeordnet ist. Mittels des Auflageelements **21** ist die Trageinrichtung **5** auf einer der Auflageflächen **23** der Aufnahmeeinheit **24** auflegbar. Die Trageinrichtung **5** ist zwischen einem Einbauzustand, in dem die selbige an dem Gehäuse **3** gelagert ist, und einem Ausbauzustand, in dem die selbige von dem Gehäuse **3** getrennt ist, überführbar.

Die Verriegelungseinheit **9** ist an derjenigen Schiene **7** der Trageinrichtung **5** angeordnet, an welcher das Auflageelement **21** der Trageinrichtung **5** befestigt ist. Die Verriegelungseinheit **9** umfasst ein Verriegelungselement **10** und ein Stellelement **11.** Das Verriegelungselement **10** sowie das Stellelement **11** sind hier drehbar um eine gemeinsame Drehachse **12** an der Schiene **7** gelagert, wobei eine Verdrehung der beiden Elemente **10, 11** unabhängig voneinander möglich ist. Die Drehachse **12** wird hierbei von einem an der Schiene **7** angeordneten Niet **33** gebildet. Ferner umfasst die Verriegelungseinheit **9** ein Kopplungselement **19,** welches an der anderen der beiden Schienen **8** des Schienensystems **6** angeordnet ist.

Das Verriegelungselement **10** weist einen Formschlussbereich **14** auf, welcher mit einem Formschlussbereich **15** des Stellelements **11** korrespondiert. Ferner weist das Verriegelungselement **10** einen Hakenabschnitt **20** und einen Anschlagabschnitt **27** auf. Dabei steht der Anschlagabschnitt **27** über die Trageinrichtung **5** hinaus hervor. Das Verriegelungselement **10** ist zwischen einer Blockierstellung und einer Freistellung überführbar. Weiterhin ist ein Schwerpunkt **29** des Verriegelungselements **10** in einem Abstand **13** von der Drehachse **12** angeordnet.

Das Stellelement **11** weist neben dem Formschlussbereich **15** ebenfalls einen Anschlagabschnitt **25** auf. Dabei ist das Stellelement **11** in Form eines Teilkreisrings ausgebildet, der sich um die Drehachse **12** erstreckt, und infolge der drehbaren Lagerung zwischen einer Ruhestellung und einer Stützstellung überführbar. Ein Schwerpunkt **17** des Stellelements **17** ist hierbei ebenfalls in einem Abstand **18** von der Drehachse **12** angeordnet.

In dem in **Figur 2** gezeigten Ausbauzustand der Trageinrichtung **5** wird das Ausziehen der Schienen **7,** 8 relativ zueinander auf folgende Weise mittels der Verriegelungseinheit **9** blockiert. Letztere liegt folglich in ihrem Blockierzustand vor:
Aufgrund der Anordnung des Schwerpunkts **17** des Stellelements **11** in einem Abstand **18** von der Drehachse **12,** bewirkt die Schwerkraft ein Drehmoment um die Drehachse **12,** infolge der das Stellelement **11** in seine Ruhestellung überführbar ist. Dabei liegt der Anschlagabschnitt **25** des Stellelements **11** auf einem Anschlag **26,** der von dem Auflageelement **21** der Trageinrichtung **5** gebildet wird. Hierdurch wird eine infolge der Wirkung der Schwerkraft bedingte Verdrehung des Stellelements **11** über die Ruhestellung hinaus blockiert. In seiner Ruhestellung behindert das Stellelement **11** die Überführung des Verriegelungselements **10** zwischen seiner Freistellung und seiner Blockierstellung nicht. Dies ist insbesondere dadurch möglich, dass das Verriegelungselement **10** unabhängig von der Verdrehung des Stellelements **11** drehbar gelagert ist.

In dem Ausbauzustand der Trageinrichtung **5** liegt das Verriegelungselement **10** in seiner Blockierstellung vor. Dabei wird das Verriegelungselement **10** infolge der auf das selbige wirkenden Schwerkraft und aufgrund des in einem Abstand **13** zu der Drehachse **12** angeordneten Schwerpunkts **29** um die Drehachse **12** verdreht. Hierbei greift der Hakenabschnitt **20** des Verriegelungselements **10** formschlüssig in das Kopplungselement **19** ein und beendet die Drehbewegung des Verriegelungselements **10.** Das Kopplungselement **19** weist hierfür einen korrespondieren Hakenabschnitt **34** auf. Aufgrund der Anordnung der beiden Elemente **10, 19** an verschiedenen Schienen **7, 8** des Schienensystems **6** wird das Ausziehen der Schienen **7, 8** relativ zueinander somit infolge des Formschlusses blockiert.

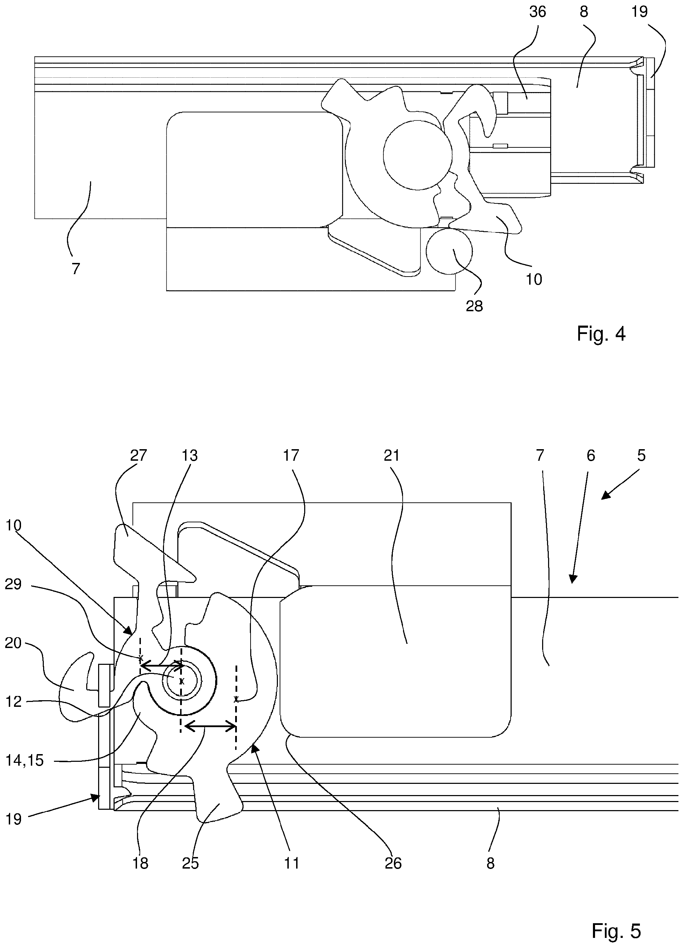

In einem Einbauzustand der Trageinrichtung **5,** wie er in **Figur 3** gezeigt ist, ist das Ausziehen der Schienen **7, 8** hingegen freigegeben. Die Verriegelungseinheit **9** liegt mithin in ihrem Freizustand vor. Im Zuge der Überführung der Trageinrichtung **5** von ihrem Ausbauzustand in ihren Einbauzustand schlägt der über die Trageinrichtung **5** hervorstehende Anschlagabschnitt **27** des Verriegelungselements **10** wie in **Figur 3** gezeigt an dem parallel zur Frontseite **30** des Gehäuses **3** verlaufenden Teil der oberen Horizontalstrebe **28** an. Der Anschlagabschnitt **27** des Verriegelungselements **10** weist hierbei eine abgeschrägte Kontaktfläche **35** auf, sodass das Verriegelungselement **10** im Zuge des Einbauvorgangs der Trageinrichtung **5** in das Gehäuse **3** entgegen der Schwerkraft nach oben bewegt wird. Hierdurch wird die formschlüssige Kopplung des Hakenabschnitts **20** des Verriegelungselements **10** mit dem Kopplungselement **19** aufgehoben. Die mit dem Kopplungselement **19** versehene Schiene **8** kann wie in **Figur 4** gezeigt mithin relativ zu der mit dem Verriegelungselement **10** versehenen Schiene **7** verschoben werden.

Die vorstehend beschriebene Blockierung des Ausziehens des Schienensystems 6 in einem Ausbauzustand der Trageinrichtung **5** ist für eine Nutzungsausrichtung der Trageinrichtung **5** beschrieben. Die Nutzungsausrichtung kennzeichnet sich dadurch, dass die Trageinrichtung **5** üblicherweise in dieser Ausrichtung zur Garung der Lebensmittel verwendet wird.

In einer Umkehrausrichtung hingegen, welche in **Figur 5** gezeigt ist, in der die Trageinrichtung **5** um 180° um eine Horizontale gegenüber der Nutzungsausrichtung verdreht ist, wird die Sicherung des Schienensystems **6** auf folgende Weise gewahrt: Aufgrund der Anordnung des Schwerpunkts **17** des Stellelements **11** in einem Abstand **18** zu der Drehachse **12** wird bewirkt, dass das Stellelement **11** bei einer Verdrehung der Trageinrichtung **5** infolge der drehbaren Lagerung desselbigen an der Schiene **7** bedingt durch ein infolge der Schwerkraft hervorgerufenes Drehmoment verdreht wird. In einem gegenüber der Ruhestellung verdrehten Zustand des Stellelements **11** liegt das selbige in seinem Stützzustand vor. Insbesondere entfällt der Anschlag des Anschlagabschnitts **25** an dem Auflageelement **21.** In dem Stützzustand des Stellelements **11** greift selbiges mittels der komplementären Formschlussbereiche **14, 15** unter Bildung eines Formschlusses mit dem Verriegelungselement **10** ein, wobei im Zuge der Überführung des Stellelements **11** von seiner Ruhestellung in seine Stützstellung der Formschlussbereich **15** des Stellelements **11** gewissermaßen entgegen der Wirkungsrichtung der Schwerkraft "nach oben" bewegt wird. Hierdurch hält das Stellelement **11** das Verriegelungselement **10** entgegen der auf das Verriegelungselement **10** wirkenden Schwerkraft in dessen Blockierstellung und verhindert somit eine Verdrehung des Verriegelungselements **10** und mithin eine Bewegung desselben "nach unten". Letztere würde dazu führen, dass der Formschluss des Verriegelungselements **10** mit dem Kopplungselement **19** aufgelöst würde, was bei Vorliegen der Trageinrichtung **5** in deren Umkehrausrichtung grundsätzlich nicht gewünscht ist. Stattdessen greift der Hakenabschnitt **20** des Verrieglungselements **10** - analog zu der Nutzungsausrichtung - mit dem Kopplungselement **19** ein und blockiert wunschgemäß das Ausziehen der Schienen **7, 8** relativ zueinander. Die Verriegelungseinheit **9** liegt folglich in ihrem Blockierzustand vor.

### Bezugszeichenliste

- 1: Gerät
- 2: Wandung
- 3: Gehäuse
- 4: Innenraum
- 5: Trageinrichtung
- 6: Schienensystem
- 7: Schiene
- 8: Schiene
- 9: Verriegelungseinheit
- 10: Verriegelungselement
- 11: Stellelement
- 12: Drehachse
- 13: Abstand
- 14: Formschlussbereich
- 15: Formschlussbereich
- 17: Schwerpunkt
- 18: Abstand
- 19: Kopplungselement
- 20: Hakenabschnitt
- 21: Auflageelement
- 22: Seitenwandung
- 23: Auflagefläche
- 24: Aufnahmeeinheit
- 25: Anschlagabschnitt
- 26: Anschlag
- 27: Anschlagabschnitt
- 28: Horizontalstrebe
- 29: Schwerpunkt
- 30: Frontseite
- 31: Tür
- 32: Vertikalstrebe
- 33: Niet
- 34: Hakenabschnitt
- 35: Kontaktfläche
- 36: Schiene

## Patentansprüche

1. Trageinrichtung für ein Gerät (1) zur Reinigung, Lagerung oder Garung von Gegenständen, welches ein von Wandungen (2) gebildetes Gehäuse (3) umfasst, mittels dessen ein Innenraum (4) räumlich eingefasst ist,
wobei die Trageinrichtung (5) mindestens ein Schienensystem (6) mit mindestens zwei miteinander verbundenen, relativ zueinander beweglichen Schienen (7, 8) sowie mindestens ein Tragelement umfasst,
wobei mindestens eine an der Trageinrichtung (5) angeordnete Verriegelungseinheit (9) vorgesehen ist, welche mindestens ein Verriegelungselement (10) umfasst, das zwischen einer Blockierstellung und einer Freistellung überführbar ist,
wobei die Verriegelungseinheit (9) bei Vorliegen der Trageinrichtung (5) in ihrem Einbauzustand, in dem die Trageinrichtung (5) an dem Gehäuse (3) eines Gerätes (1) gelagert ist, in einem Freizustand vorliegt, bei dessen Vorliegen das Verriegelungselement (10) das Ausziehen des Schienensystems (6) freigibt,
wobei die Verriegelungseinheit (9) bei Vorliegen der Trageinrichtung (5) in ihrem Ausbauzustand, in dem die Trageinrichtung (5) von dem Gehäuse (3) eines Gerätes (1) getrennt ist, in ihrem Blockierzustand vorliegt, bei dessen Vorliegen das Verriegelungselement (10) unter Bildung eines Formschlusses das Ausziehen des Schienensystems (6) blockiert,
**dadurch gekennzeichnet, dass**
die Verriegelungseinheit (9) ein Stellelement (11) aufweist, das mit dem Verriegelungselement (10) zusammenwirkt,
das Stellelement (11) um eine Drehachse (12) drehbar an der Trageinrichtung (5) gelagert ist, sodass es zwischen einer Ruhestellung und einer Stützstellung überführbar ist, und das Stellelement (11) bei Vorliegen in seiner Stützstellung das Verriegelungselement (10) entgegen der Wirkung der Schwerkraft in dessen Blockierstellung hält,
wobei das Verriegelungselement (10) und das Stellelement (11) komplementäre Formschlussbereiche (14, 15) aufweisen, sodass das Stellelement (11) bei Vorliegen in seiner Stützstellung unter Ausbildung eines Formschlusses mit dem Verriegelungselement (10) eingreift.
wobei ein Schwerpunkt (17) des Stellelements (11) zumindest bei Vorliegen der Trageinrichtung (5) in einer Umkehrausrichtung in einem Abstand (18) von der Drehachse (12) angeordnet ist, wobei die Trageinrichtung (5) bei Vorliegen in ihrer Umkehrausrichtung um 180° um eine Horizontale gegenüber einer Nutzungsausrichtung verdreht ist, die die Trageinrichtung (5) bei Vorliegen in ihrem Einbauzustand aufweist.
wobei das Stellelement (11) mindestens einen Anschlagabschnitt (25) aufweist, mittels dessen das Stellelement (11) zumindest bei Vorliegen der Trageinrichtung (5) in ihrem Einbauzustand an einem Anschlag (26) anschlagen kann, sodass eine infolge der Wirkung der Schwerkraft bedingte Verdrehung des Stellelements (11) um die Drehachse (12) über die Ruhestellung hinaus blockiert ist,
wobei die Verriegelungseinheit (9) mindestens ein Kopplungselement (19) umfasst, mit dem das Verriegelungselement (10) formschlüssig zusammenwirken kann, und
wobei das Verriegelungselement (10) mindestens einen Anschlagabschnitt (27) aufweist, der derart über die Trageinrichtung (5) hinaus vorsteht, dass das Verriegelungselement (10) im Zuge der Überführung der Trageinrichtung (5) in deren Einbauzustand mittelbar oder unmittelbar an dem Gehäuse (3) eines Gerätes (1) anschlagen kann, sodass das Verriegelungselement (10) automatisch in dessen Freistellung überführbar ist.

2. Trageinrichtung nach Anspruch 1, **dadurch gekennzeichnet, dass** das Stellelement (11) bei Vorliegen in seiner Ruhestellung die Überführung des Verriegelungselements (10) zwischen seiner Freistellung und seiner Blockierstellung freigibt.

3. Trageinrichtung nach Anspruch 1 oder 2, **dadurch gekennzeichnet, dass** das Verriegelungselement (10) um eine Drehachse (12) drehbar an der Trageinrichtung (5) gelagert ist, wobei vorzugsweise das Verriegelungselement (10) und das Stellelement (11) um dieselbe Drehachse (12) drehbar sind.

4. Trageinrichtung nach Anspruch 3, **dadurch gekennzeichnet**, ein Schwerpunkt (29) des Verriegelungselements (10) zumindest bei Vorliegen der Trageinrichtung (5) in einer Nutzungsausrichtung in einem Abstand (13) von der Drehachse (12) angeordnet ist, wobei die Trageinrichtung (5) ihre Nutzungsausrichtung zumindest bei Vorliegen in ihrem Einbauzustand aufweist.

5. Trageinrichtung nach einem der Ansprüche 1 bis 4, **dadurch gekennzeichnet, dass** das Stellelement (11) in Form eines Teilkreisrings ausgebildet ist, der sich um die Drehachse (12) erstreckt.

6. Trageinrichtung nach einem der Ansprüche 1 bis 5, **dadurch gekennzeichnet, dass** zumindest das Verriegelungselement (10), vorzugsweise ferner das Stellelement (11), einer Schiene (7, 8) des Schienensystems (6) zugeordnet ist bzw. sind.

7. Trageinrichtung nach einem der Ansprüche 5 oder 6,
**dadurch gekennzeichnet, dass** das
Kopplungselement (19) einer anderen Schiene (7, 8) des Schienensystems (6) zugeordnet ist als das Verriegelungselement (10), wobei das Kopplungselement (19) vorzugsweise unmittelbar an der jeweiligen Schiene (7, 8) angeordnet ist.

8. Trageinrichtung nach einem der Ansprüche 1 bis 7, **dadurch gekennzeichnet, dass** die Trageinrichtung (5) mindestens ein Auflageelement (21) umfasst, mittels dessen das Schienensystem (6) auf einer einem Gehäuse (3), vorzugsweise einer Seitenwandung (22) eines Gehäuses (3), zugeordneten Auflagefläche (23) auflegbar ist.

9. Gerät (1) zur Reinigung, Lagerung oder Garung von Gegenständen, welches ein von Wandungen (2) gebildetes Gehäuse (3) umfasst, mittels dessen ein Innenraum (4) räumlich eingefasst ist, und welches mindestens eine aus dem Gehäuse (3) entnehmbare Trageinrichtung (5) gemäß einem der Ansprüche 1 bis 8 umfasst.

10. Gerät nach Anspruch 9, **gekennzeichnet durch** eine Aufnahmeeinheit (24), die in Kraft übertragender Weise an dem Gehäuse (3) angeordnet ist und dazu geeignet ist, die Trageinrichtung (5) aufzunehmen, wobei vorzugsweise die Trageinrichtung (5) auf einer Auflagefläche (23) der Aufnahmeeinheit (24) ablegbar ist.

## Claims

1. Support arrangement for an apparatus (1) for cleaning, storing or cooking items including comprising a housing (3) which is formed by walls (2) and by means of which an internal space (4) is spatially enclosed,
wherein the support arrangement (5) includes at least one rail system (6) having at least two rails (7, 8) which are connected together and which are moveable relative to each other and at least one support element,
wherein at least one locking unit (9) arranged at the support arrangement (5) is provided, which locking unit (9) includes at least one locking element (10) which can be transferred between a blocking position and a free position,
wherein when the support arrangement (5) is in its installation state in which the support arrangement (5) is mounted to the housing (3) of an apparatus (1) the locking unit (9) is in its free state in which the locking element (10) enables extension of the rail system (6),
wherein when the support arrangement (5) is in its removed state in which the support arrangement (5) is separated from the housing (3) the locking unit (9) is in its blocking state in which the locking element (10) blocks extension of the rail system (6) with the formation of a positively locking relationship,
**characterised in that**
the locking unit (9) has a setting element (11) cooperating with the locking element (10), wherein the setting element (11) is mounted to the support arrangement (5) rotatably about an axis of rotation (12) so that it can be transferred between a rest position and a supporting position, and
wherein when in its supporting position the setting element (11) holds the locking element (10) in the blocking position thereof against the action of the force of gravity,
wherein the locking element (10) and the setting element (11) have complementary positively locking regions (14, 15) so that when the setting element (11) is in its supporting position it engages with the locking element (10) providing a positively locking relationship,
wherein a centre of gravity (17) of the setting element (11) is arranged at a spacing (18) from the axis of rotation (12) at least when the support arrangement (5) is in a reversal orientation, wherein when in its reversal orientation the support arrangement (5) is turned by 180° about a horizontal with respect to an orientation of use which the support arrangement (5) has when it is in its installation state,
wherein the setting element (11) has at least one abutment portion (25) by means of which the setting element (11) can butt against an abutment (26) at least when the support arrangement (5) is in its installation state so that rotation, caused by the action of the force of gravity, of the setting element (11) about the axis of rotation (12) beyond the rest position is blocked,
wherein the locking unit (9) includes at least one coupling element (19) with which the locking element (10) can cooperate in positively locking relationship, and
wherein the locking element (10) has at least one abutment portion (27) which projects beyond the support arrangement (5) in such a way that the locking element (10) can butt against the housing (3) of an apparatus (1) directly or indirectly in the course of transfer of the support arrangement (5) into its installation state, such that the locking element (10) is automatically transferable in to its free state.

2. Support arrangement according to claim 1 **characterised in that** when the setting element (11) is in its rest position it enables transfer of the locking element (10) between its free position and its blocking position.

3. Support arrangement according to claim 1 or claim 2 **characterised in that** the locking element (10) is mounted to the support arrangement (5) rotatably about an axis of rotation (12), wherein preferably the locking element (10) and the setting element (11) are rotatable about the same axis of rotation (12).

4. Support arrangement according to claim 3 **characterised in that** a centre of gravity (29) of the locking element (10) is arranged at a spacing (13) from the axis of rotation (12) at least when the support arrangement (5) is in an orientation of use, wherein the support arrangement (5) has its orientation of use at least when in its installation state.

5. Support arrangement according to one of claims 1 to 4 **characterised in that** the setting element (11) is in the form of a part-circular ring extending around the axis of rotation (12).

6. Support arrangement according to one of claims 1 to 5 **characterised in that** at least the locking element (10) and preferably further the setting element (11) is or are associated with a rail (7, 8) of the rail system (6).

7. Support arrangement according to claim 5 or claim 6 **characterised in that** the coupling element (19) is associated with another rail (7, 8) of the rail system (6) than the locking element (10), wherein the coupling element (19) is preferably arranged directly at the respective rail (7, 8).

8. Support arrangement according to one of claims 1 to 7 **characterised in that** the support arrangement (5) includes at least one supporting element (21), by means of which the rail system (6) can be placed on a supporting surface (23) associated with the housing (3), preferably a side wall (22) of the housing (3).

9. Apparatus (1) for cleaning, storing or cooking objects, which comprises a housing (3) formed by walls (2), by means of which an internal space (4) is spatially enclosed, and which comprises at least one support arrangement (5) removable from the housing (3) according to one of the claims 1 to 8.

10. Apparatus according to claim 9 **characterised by** a receiving unit (24) which is arranged in force-transmitting fashion on the housing (3) and is suitable for receiving the support arrangement (5), wherein preferably the support arrangement (5) can be placed on the supporting surface (23) of the receiving unit (24).

## Revendications

1. Dispositif de support pour un appareil (1) de nettoyage, de stockage ou de cuisson d'objets, lequel comprend un carter (3) formé de parois (2), au moyen duquel un espace intérieur (4) est bordé spatialement,
le dispositif de support (5) comprenant au moins un système de rails (6) avec au moins deux rails (7, 8) reliés l'un à l'autre, mobiles l'un par rapport à l'autre, ainsi qu'au moins un élément de support,
au moins une unité de verrouillage (9) agencée au dispositif de support (5) étant prévue, laquelle comprend au moins un élément de verrouillage (10) qui peut être fait alterner entre une position de blocage et une position de libération,
l'unité de verrouillage (9), lorsque le dispositif de support (5) est dans son état de montage dans lequel le dispositif de support (5) est logé au carter (3) d'un appareil (1), étant dans un état de libération, en présence duquel l'élément de verrouillage (10) libère l'extraction du système de rails (6),
l'unité de verrouillage (9), lorsque le dispositif de support (5) est dans son état de démontage dans lequel le dispositif de support (5) est séparé du carter (3) d'un appareil (1), étant dans son état de blocage, en présence duquel l'élément de verrouillage (10) bloque l'extraction du système de rails (6) en formant une complémentarité de forme,
**caractérisé en ce que**
l'unité de verrouillage (9) comprend un élément de réglage (11) qui coopère avec l'élément de verrouillage (10),
l'élément de réglage (11) est logé au dispositif de support (5) de manière rotative autour d'un axe de rotation (12), de sorte qu'il puisse être fait alterner entre une position de repos et une position d'appui, et
l'élément de réglage (11), lorsqu'il est dans sa position d'appui, maintient l'élément de verrouillage (10) contre l'effet de la gravité dans sa position de blocage,
l'élément de verrouillage (10) et l'élément de réglage (11) présentant des zones de complémentarité de forme (14, 15) complémentaires, de sorte que l'élément de réglage (11), lorsqu'il est dans sa position d'appui, entre en prise avec l'élément de verrouillage (10) en formant une complémentarité de forme,
un centre de gravité (17) de l'élément de réglage (11) étant agencé au moins lorsque le dispositif de support (5) est dans une orientation d'inversion à une distance (18) de l'axe de rotation (12), le dispositif de support (5), lorsqu'il est dans son orientation d'inversion, étant tourné de 180° autour d'une horizontale par rapport à une orientation d'utilisation que le dispositif de support (5) présente lorsqu'il est dans son état de montage,
l'élément de réglage (11) comprenant au moins une section de butée (25), au moyen de laquelle l'élément de réglage (11) peut venir au contact d'une butée (26) au moins lorsque le dispositif de support (5) est dans son état de montage, de sorte qu'une torsion de l'élément de réglage (11) autour de l'axe de rotation (12) conditionnée du fait de l'effet de la gravité soit bloquée au-delà de la position de repos,
l'unité de verrouillage (9) comprenant au moins un élément de couplage (19) avec lequel l'élément de verrouillage (10) peut coopérer par complémentarité de forme, et
l'élément de verrouillage (10) comprenant au moins une section de butée (27) qui fait saillie du dispositif de support (5) de telle sorte que l'élément de verrouillage (10) puisse buter, au cours du passage du dispositif de support (5) vers son état de montage, indirectement ou directement contre le carter (3) d'un appareil (1), de sorte que l'élément de verrouillage (10) puisse être amené automatiquement dans sa position de libération.

2. Dispositif de support selon la revendication 1, **caractérisé en ce que** l'élément de réglage (11) lorsqu'il est dans sa position de repos libère le passage de l'élément de verrouillage (10) entre sa position de libération et sa position de blocage.

3. Dispositif de support selon la revendication 1 ou 2, **caractérisé en ce que** l'élément de verrouillage (10) est logé de manière rotative autour d'un axe de rotation (12) au dispositif de support (5), l'élément de verrouillage (10) et l'élément de réglage (11) étant de préférence rotatifs autour du même axe de rotation (12).

4. Dispositif de support selon la revendication 3, **caractérisé en ce qu'**un centre de gravité (29) de l'élément de verrouillage (10) est agencé, au moins lorsque le dispositif de support (5) est dans une orientation d'utilisation, à une distance (13) de l'axe de rotation (12), le dispositif de support (5) présentant son orientation d'utilisation au moins lorsqu'il est dans son état de montage.

5. Dispositif de support selon l'une quelconque des revendications 1 à 4, **caractérisé en ce que** l'élément de réglage (11) est réalisé sous la forme d'un cercle gradué qui s'étend autour de l'axe de rotation (12).

6. Dispositif de support selon l'une quelconque des revendications 1 à 5, **caractérisé en ce qu'**au moins l'élément de verrouillage (10), de préférence en outre l'élément de réglage (11), est ou sont associé(s) à un rail (7, 8) du système de rails (6).

7. Dispositif de support selon l'une quelconque des revendications 5 ou 6, **caractérisé en ce que** l'élément de couplage (19) est associé à un autre rail (7, 8) du système de rails (6) que l'élément de verrouillage (10), l'élément de couplage (19) étant agencé de préférence directement au rail (7, 8) respectif.

8. Dispositif de support selon l'une quelconque des revendications 1 à 7, **caractérisé en ce que** le dispositif de support (5) comprend au moins un élément d'appui (21) au moyen duquel le système de rails (6) peut être posé sur une surface d'appui (23) associée à un carter (3), de préférence à une paroi latérale (22) d'un carter (3).

9. Appareil (1) de nettoyage, de stockage ou de cuisson d'objets, lequel comprend un carter (3) formé de parois (2), au moyen duquel un espace intérieur (4) est bordé spatialement, et lequel comprend au moins un dispositif de support (5) selon l'une quelconque des revendications 1 à 8 pouvant être retiré du carter (3).

10. Appareil selon la revendication 9, **caractérisé par** une unité de réception (24) qui est agencée au carter (3) de manière à transmettre des forces et convient pour recevoir le dispositif de support (5), le dispositif de support (5) pouvant être déposé de préférence sur une surface d'appui (23) de l'unité de réception (24).
